(19) Europäisches Patentamt
European Patent Office
Office européen des brevets

(11) **EP 0 659 265 B1**

(12) **EUROPEAN PATENT SPECIFICATION**

(45) Date of publication and mention
of the grant of the patent:
**04.03.1998   Bulletin 1998/10**

(51) Int Cl.6: **G01C 3/00**, G01C 5/00,
G01C 3/08, G01B 11/26,
G01C 15/00, G01S 5/16

(21) Application number: **92920339.6**

(22) Date of filing: **09.09.1992**

(86) International application number:
**PCT/US92/07615**

(87) International publication number:
**WO 94/05970 (17.03.1994 Gazette 1994/07)**

(54) **SPATIAL POSITIONING SYSTEM**

RÄUMLICHE POSITIONIERUNGSVORRICHTUNG

SYSTEME DE POSITIONNEMENT SPATIAL

(84) Designated Contracting States:
**AT BE CH DE DK ES FR GB GR IE IT LI LU MC NL SE**

(43) Date of publication of application:
**28.06.1995   Bulletin 1995/26**

(73) Proprietor: **SPATIAL POSITIONING SYSTEMS, INC.**
**Blacksburg, VA 24060 (US)**

(72) Inventors:
• **DORNBUSCH, Andrew W.**
**Blacksburg, VA 24060 (US)**
• **LUNDBERG, Eric, J.**
**Reston, VA 20194 (US)**
• **BELIVEAU, Yvan, J.**
**Blacksburg, VA 24060 (US)**
• **Pratt, Timothy**
**Blacksburg, Virginia 24060 (US)**

(74) Representative: **Walsh, Michael Joseph et al**
**TOMKINS & CO.**
**5, Dartmouth Road**
**Dublin 6 (IE)**

(56) References cited:
| | |
|---|---|
| EP-A- 0 269 283 | WO-A-92/03701 |
| US-A- 4 700 301 | US-A- 4 709 580 |
| US-A- 4 791 297 | US-A- 4 820 041 |
| US-A- 4 830 489 | US-A- 4 895 440 |

**Description**

<u>Field of Invention</u>

The present invention relates to a spatial positioning and measurement system and, more particularly, to a spatial positioning and measurement system which provides three-dimensional position and/or measurement information of an object using one or more fixed referent station systems, and one or more portable position sensor systems.

<u>Background of Invention</u>

US Patent Specification No. 4,709,580 describes a system for determining the attitude and rate of rotation of a moving object, such as a satellite. According to this specification, an object such as a satellite is provided with at least one retroreflective attitude marker having a predetermined plane of retroreflection, one or more laser illuminator/receivers are directed towards the satellite, and the timing of retroreflective pulses is determined in order to establish the attitude and spin rate of the satellite. The purpose of the system is to assist in the recovery or stabilisation of a satellite which has become disabled and is rotating or spinning in space as it is orbiting the earth. By determining the attitude and spin rate of the disabled satellite, there is provided the possibility of stabilising the satellite by possible actuation of control jets, for example, to facilitate its continued use or recovery. The disclosure of this patent specification relates solely to the determination of spin and rate of rotation, and optionally other information relative to the attitude and movement of the object rotating in space, and is not directly pertinent to the field of the the present invention, which addresses the determination of the position of an object.

US Patent Specification No. 4,700,301 provides a method for automatically steering a vehicle along a pre-programmed course by use of a microprocessor. Lasers emitting a narrow beam of light are positioned at two reference points around the area to be traversed by the vehicle, such as a field. An all-directional light detector is mounted on top of the vehicle. A bi-directional light detector with a radio transmitter to transmit a detected signal to the vehicle is located at a third fixed location. Laser light reflected from the vehicle detector and sensed by the bi-directional detector at the third reference location initiates counts by a microprocessor corresponding to the times of the events. From these counts, the vehicle's position in the field is computed. By comparing the vehicle's present position with its past position, the direction of motion is computed. Further processing enables a desired direction of motion to be established and selected. The arrangement described requires a minimum of three fixed locations, two of which may be laser emitters, while the third may be either an emitter or a light detector. Each of the emitters delivers a single beam which is divergent in a plane parallel to its axis of rotation, in other words perpendicular to the plane in which it is swept.

In Published International Patent Application No. W0 92/03701 (European Patent Application No. 91919739.2), fixed stations are used in locating one or more portable positioning sensors. Each fixed station produces a set or multiple sets of counter-rotating laser beams which rotate at constant angular velocity. The portable position sensor, which includes a light sensitive detector and computer, can determine its location in reference to the fixed stations, through time measurement of the received laser beams. It is envisioned that in certain applications it would be useful to maintain processing and display capabilities in a central location. The invention of W0 92/03701 does not provide for this. In addition, the invention of W0 92/03701 uses a global frame of reference and requires a number of known site positions in order for the portable position sensor to determine the positions of the fixed referent stations through a calibration sequence.

Figure 16B of WO 92/03701 shows a spatial positioning system having two fixed referent stations, each emitting two divergent sweeping radiation beams. Both beams are inclined relative to their axes of rotation, to enable the required positional information to be developed by the determination features of the system.

<u>Summary of Invention</u>

The present invention provides a system whereby the fixed referent stations may determine their location in reference to one another, establishing a local coordinate system. This information may be transferred to a portable position sensor for use in determining its location.

Such a system is defined in Claim 1. Dependent Claims 2 - 14 define specific embodiments of the invention as defined by Claim 1.

The present invention provides a spatial positioning and measurement system utilizing at least three fixed stations to determine the position of one or more portable positioning reflectors. Each fixed station produces a set of rotating fan-shaped laser beams which rotate at constant angular velocity. Each fixed station also includes a receiving device which is light sensitive. When the rotation of the laser beam is such that it is in line with a portable positioning reflector, the transmitted laser beam is reflected off the portable position reflector and received at the fixed receiver.

For any point which is crossed by the fanned laser beams of a fixed station, an angle perpendicular to the rotation of the laser beam angle can be determined. Once these angles are known for three fixed stations, the point of intersection of three planes, and thus the three-dimensional position of the point, is determined.

The portable positioning reflector (hereinafter called the "P-reflector") includes a reflective surface or surfaces, which redirect the incoming laser light back toward the fixed station. A retroreflector, which is used with electronic distance measurement devices (EMD's), is an example of a reflector which could be used as the reflective surface(s) of the P-reflector. A number of retroreflectors preferably would be used to provide a 360 degree horizontal reflecting capability.

The fixed position sensor preferably includes a light sensitive detector (hereinafter called the "detector") and a computer. The detector preferably includes a lens system which directs light to a photosensitive detector. The detector generates an electrical pulse when struck by a laser beam. This pulse is sent to a computer. The computer time labels each received pulse, which corresponds to the time the reflected laser beam from the P-reflector strikes the optical receiver. Once the computer has accepted, time-labeled and recorded a reflected primary pulse and a reflected secondary pulse from the P-reflector, it can determine the directional angles of the P-reflector relative to the fixed station.

The directional angles are sent to a central processor system, via a communications link. The central processor system receives angle information from a number of fixed stations. If the central processor system receives angle information from at least three fixed stations, the position of the retroreflector can be determined.

Alternatively, a portable positioning transponder (hereinafter call the "P-transponder") may be substituted for the P-reflector. The P-transponder would include a light sensitive detector. The light sensitive detector may be sensitive to light 360 degrees about the horizontal plane. An energy beam (e.g. light, radio) is emitted by the P-transponder when light from a fixed station is received by an optical detector on the transponder. The emitted wave is received back at the fixed station by a transponder receiver. In this embodiment, the transponder receiver on the fixed station would need to be of an appropriate type to receive the emission from the transponder.

Alternatively, if the energy beam emitted by the P-transponder is uniquely different in type from the laser beam energy transmitted by the fixed stations, a single transponder receiver may be located in the area to receive all signals from the P-transponder.

The use of a P-transponder increases the range of the positioning system by eliminating the reflected path of the laser beam.

If the distance between any two points within the coordinate system is known, then a local coordinate system can be established through resection equations (an EDM, a cable or any other device which can determine the distance between two points can be used to accomplish this). The situation is analogous to knowing the three angles of a triangle in two dimensional space; the triangle can be any size and still have the same three vertex angles. According to the invention, the position and attitude of any two fixed stations can be arbitrarily set and the position of a third calculated. However, the scale of the calculated positions would have no correlation with the scale of the actual system. If any two points are known in the calculated system and the corresponding distance known, a scale factor can be included which would allow the determination of the actual positions of the fixed stations in reference to one another.

In this case the rotation of the laser beams of the fixed stations are assumed to be known, e.g. vertical or horizontal.

Alternatively, fixed stations can be used which produce multiple sets of rotating beams. In this case, a minimum of two fixed stations are required to provide the position of a portable positioning sensor, reflector, or transponder.

Brief Description of the Drawings

The above aspects of the present invention can be seen from the attached drawings, in which:

Figure 1a is a schematic drawing of the fixed station in accordance with a preferred embodiment of the invention;

Figure 1b is a schematic drawing of the fixed station for use with a transponder in accordance with a preferred embodiment of the invention;

Figure 1c is a schematic drawing of the fixed station for use with a central receiving and processing system in accordance with a preferred embodiment of the invention;

Figure 2 is a schematic drawing of the portable positioning reflector in accordance with a preferred embodiment of the invention;

Figure 3 is a schematic drawing of the positioning transponder for use in the embodiment shown in Fig. 1b;

Figure 4 is a schematic drawing of the positioning system configured for use with a portable positioning reflector in accordance with a preferred embodiment of the invention;

Figure 5 is a schematic drawing of the positioning system for use with a positioning transponder in accordance with the embodiment shown in Fig. 1b;

Figure 6 is a schematic drawing of the positioning system configured for use with a portable positioning transponder and a central receiving and processing system in accordance with another embodiment; and

Figure 7 is a schematic drawing of the fixed station in accordance with the embodiment shown in Fig. 6.

<u>Detailed Description of the Preferred Embodiments</u>

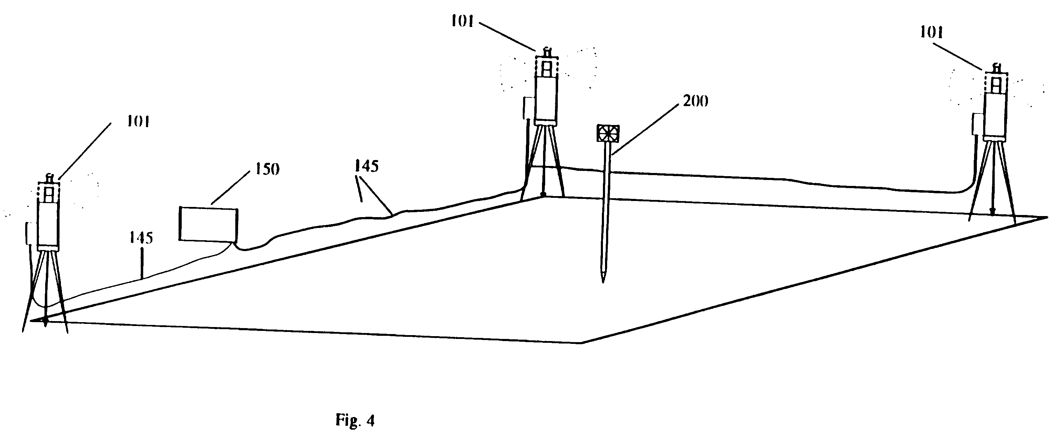

A spatial positioning and measurement system in accordance with a preferred embodiment of the invention is shown in Figure 4.

The reflector positioning system:

The reflector positioning system includes a portable positioning reflector 200, shown in Figure 2, and three or more fixed stations 101, shown in Figure la.

The portable positioning reflector (hereinafter referred to as "P-reflector") 200 includes a 360° retroreflector unit 210 and a rod 220. The retroreflector unit preferably includes a plurality of retroreflectors arranged around the upper end thereof. The retroreflector unit 210 reflects light parallel to its incoming direction and produces a virtual image which is at its center. Alternatively, the rod 220 can be replaced by a tool or machine which is specifically suited for the positioning or measurement work being performed.

The fixed stations 101 are located at known points in and/or around a measurement area, as shown in Figure 4. The fixed station 101 generates a set of rotating fanned laser beams 130. These fanned laser beams 130 periodically strike the P-reflector 200. The retroreflector unit 210 reflects the fanned laser beams 130 back toward the fixed station 101. The reflected light beam is received by a light sensitive detector 110 located on the fixed station 101. The light sensitive detector 110 generates an electrical pulse each time it receives a reflected light beam. The electrical pulses are sent to a processor 120 where they are individually time-labeled. The horizontal angle of the fanned laser beams as they strike the P-reflector 200 are determined at the processor by mathematical algorithms which use the timing information provided by the time-labels. For a general discussion of time-labelling in a spatial positioning system, see European Application No. 91919739.2 (WO 92/03701), the contents of which are incorporated herein by reference.

The angle information is sent, via a communications link 145, to a central processing system 150. The central processing system can determine the position of the P-reflector 200 if angle information is received from three cr more fixed stations 101. The position of the P-reflector 200 is the intersection of the fanned laser beams from the three fixed stations as determined through plane equations:

$$\cos\varnothing_{0,0}\sin(\theta_{0,0}-\theta'_0)(x-x_0)-\cos\varnothing_{0,0}\cos(\theta_{0,0}-\theta_0)(y-y_0)-\sin\varnothing_{0,0}(z-z_0)=0$$

$$\cos\varnothing_{0,1}\sin(\theta_{0,1}-\theta'_0)(x-x_0)-\cos\varnothing_{0,1}\cos(\theta_{0,1}-\theta_0)(y-y_0)-\sin\varnothing_{0,1}(z-z_0)=0$$

$$\cos\varnothing_{n,1}\sin(\theta_{n,1}-\theta'_0)(x-x_0)-\cos\varnothing_{n,0}\cos(\theta_{n,0}-\theta_0)(y-y_0)-\sin\varnothing_{n,0}(z-z_0)=0$$

given: $(x,y,z)$, $\theta$, $\varnothing$ for $i \in [0,n]$, $j \in [0,m]$
where $n$ = number of fixed stations and $m$ = number of laser beams for fixed station i.

The equations are solvable using standard matrix solving techniques.

The communication link may be of any suitable type, including, but not limited to, radio, optical fiber, microwave, and cable.

Alternatively, the time-labels, generated by the processor 120 at the fixed station 101, can be sent directly to the central processing system 150. The central processing system 150 would then perform all angle and position calculations necessary for determining the position of the P-reflector 200. Using this method, the time references at the fixed stations would need to be synchronized.

Alternatively, the electrical pulses, generated by the light sensitive detector 110 of the fixed station 101, can be sent directly to the central processing system 150. The central processing system 150 would then perform the time-labeling of the electrical pulses and perform all angle and position calculations necessary for determining the position of the P-reflector 200.

The Transponder System:

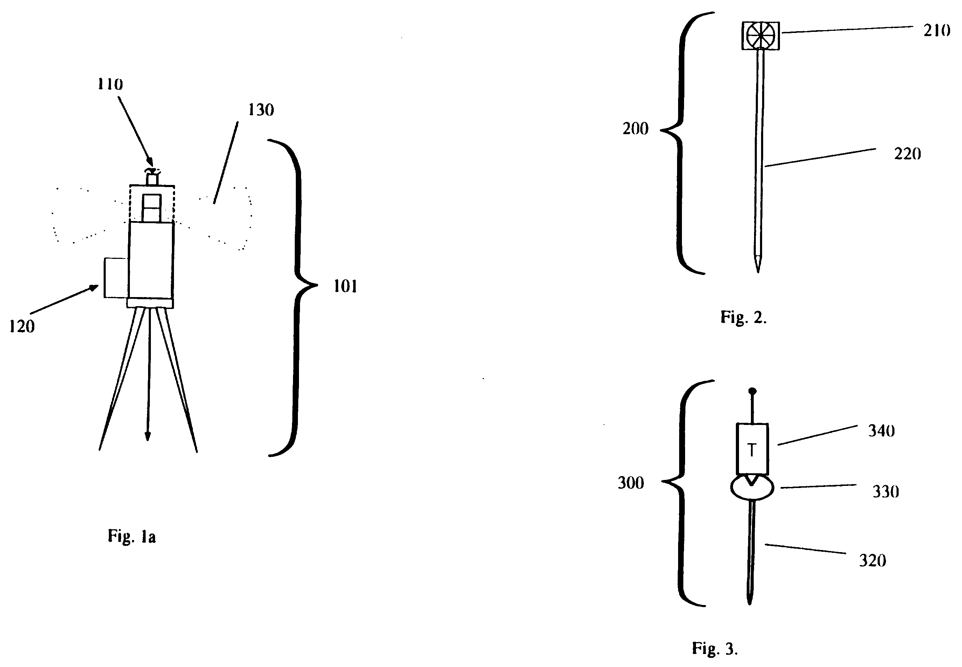

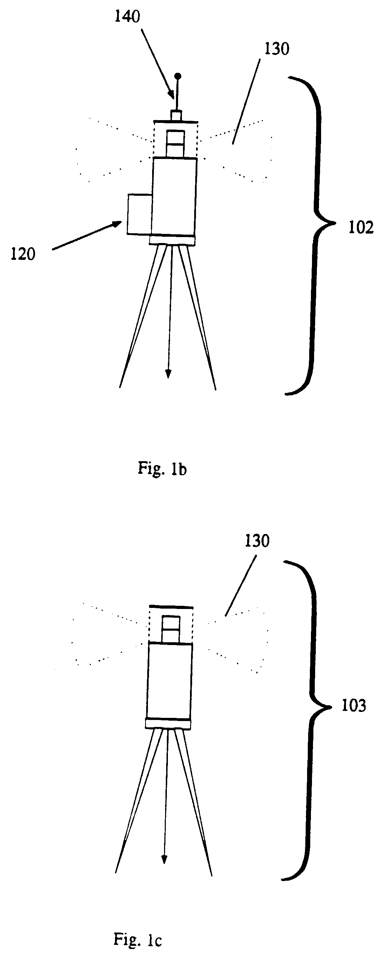

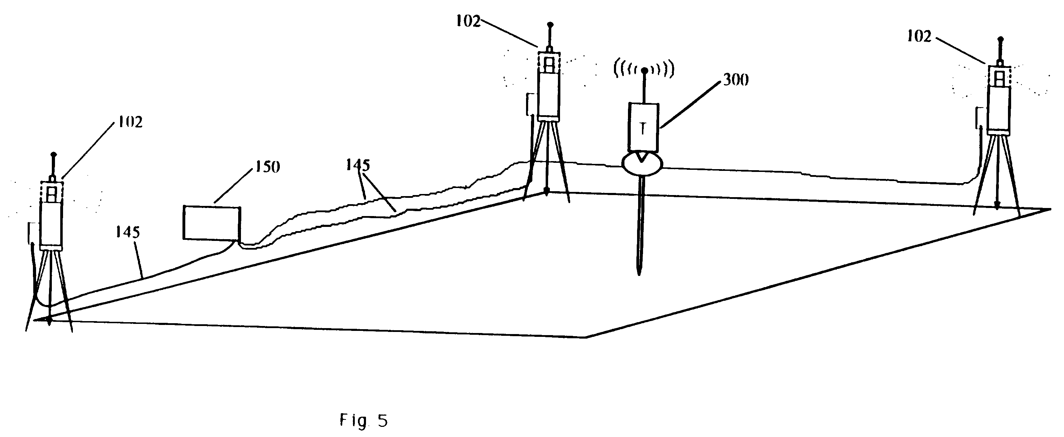

Alternatively, a portable positioning transponder (hereinafter referred to as "P-transponder") 300, shown in Figures 3 and 5, may be used in place of the P-reflector 200. The P-transponder 300 includes an optical light detector 330, a transponder 340, and a rod 320. The optical light detector 330 preferably has a view of 360° on the horizontal plane and a view less than +/- 90° vertically. The optical light detector 330 senses changes in the magnitude of light energy (e.g. the presence of a fanned laser beam 130). A fixed station 102, as shown in Figure 1b, is used in conjunction with P-transponder 300. The fixed station 102 is fitted with a transponder receiver 140 which is suited for receiving emissions from the P-transponder 300. The receiver 140 replaces the light sensitive detector 110 used in the P-reflector embodiment discussed above.

When a fanned laser beam 130 from a fixed station 102 is detected by the optical light detector 330, an electrical pulse is generated and sent to the transponder 340. The receipt of the electrical pulse triggers the transponder 340 and causes an energy beam to be emitted. The energy beam may be of any suitable type, including electromagnetic energy in the visible or radio frequencies.

The energy beam created by the transponder 340 is received by a transponder receiver 140. The receiver 140 creates an electrical pulse each time it receives an energy beam from the transponder 340. The electrical pulses are sent to the processor 120 where they are individually time-labeled. The horizontal angle of the fanned laser beams 130 as they strike the P-transponder 300 are determined at the processor 120 by mathematical algorithms which use the timing information provided by the time-labels. The time delay caused by electronics must be accounted for in calculations, if these delays are not constant.

The horizontal angle information is sent, via a communications link 145, to a central processing system 150. The central processing system 150 can determine the position of the P transponder 300 if angle information is received from three or more fixed stations 102. The position of the P-transponder is the intersection of the fanned laser beams from the three fixed stations 102 of this system determined through plane equations as in the previous embodiment.

The communication link 145 may be of any suitable type, including, but not limited to, radio, optical fiber, microwave, and cable.

Alternatively, the time-labels, generated by the processor 120 at the fixed station 102, can be sent directly to the central processing system 150. The central processing system 150 would then perform all angle and position calculations necessary for determining the position of the P-transponder 300. Using this method, the time references at the fixed stations would need to be synchronized.

Alternatively, the electrical pulses, generated by the light sensitive detector 110 of the fixed station 102, can be sent directly to the central processing system 150. The central processing system 150 would perform the time-labeling of the electrical pulses and perform all angle and position calculations necessary for determining the position of the P-transponder 300.

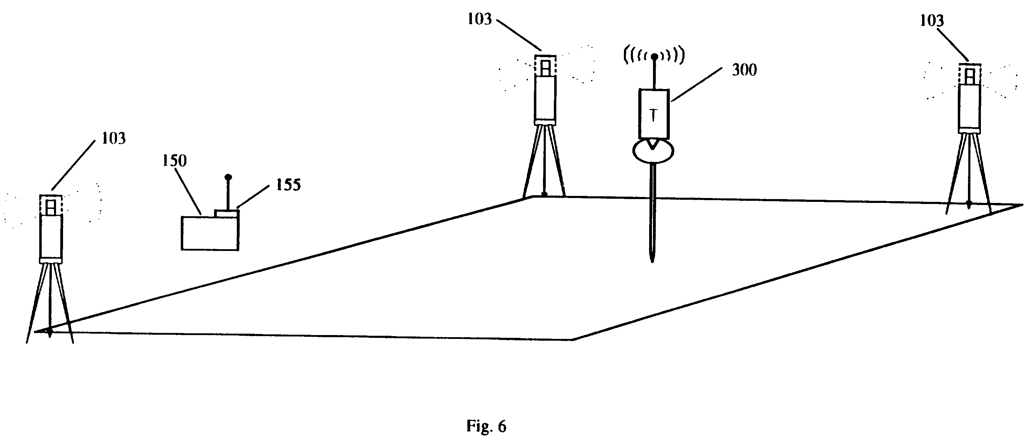

Alternatively, the energy beam emitted by the P-transponder 300 can be received by a transponder receiver 155 at the central processing system 150, as shown in Figure 6. The transponder receiver 155 creates an electrical pulse each time it receives an energy beam. The electrical pulse is sent to the central processing system 150. The central processing system 150 performs the time-labeling of the electrical pulses and performs all angle and position calculations necessary for determining the position of the P-transponder 300. Thus, in this embodiment of the present invention, no receiving or signal processing capability is required in order to determine position information. Fixed station 103 has no receiving or signal processing capability at the fixed station, as shown in Figure 1c.

The central processing system 150 may include a monitor which continually outputs position information. In addition, the central processing system 150 may include a plotter or other printing device for outputting position information. The central processing system 150 may also include a control system for remote control of a vehicle or other device, attached to a portable position sensor, reflector, or transponder.

In addition, if the fixed stations 101 used in any of the above embodiments produce two or more sets of rotating fanned laser beams, only two fixed stations 101 are necessary to determine the location of any of the portable position sensors, reflectors, or transponders.

The use of fixed stations which have optical receiving and processing capabilities allows the position of the fixed stations to be determined in reference to each other.

Since the fixed stations can determine their position in reference to one another, fixed stations can be repositioned as long as two fixed stations remain stationary during repositioning of the other stations.

The Counter-rotating/Rotating System:

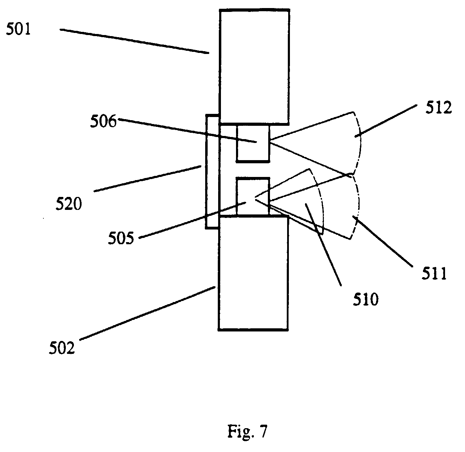

The invention also includes an alternative fixed station, as shown in Figure 7. According to this embodiment, the lower optics 505 of each fixed station produce a pair of fanned laser beams 510, 511, beam 510 being slanted from the axis of rotation 510 and beam 511 being parallel to the axis of rotation. The upper optics 506 of each fixed station produce fanned laser beam 512 which is parallel to the axis of rotation.

Alternatively, any combination of fanned laser beams or sets of fanned laser beams and inclination of fanned laser beams can be used.

The rotation of beams 510, 511 is controlled by motor 502, while the rotation of beam 512 is controlled by motor 501. The two motors, 501 and 502, are rotated at different speeds. The fanned laser beams from the two motors, 510, 511, 512, can be differentiated via software phase-locked-loops (PLL's). The two motors, 501 and 502, rotate in relation to one another in the following way:

$$jA = kB$$

where:

A = angular velocity of motor 501
B = angular velocity of motor 502
j, k = integers, with $j \neq k$

For example:
Let j = 7 and k = 8, motor 501 would spin 8 revolutions in the time motor 502 would spin 7.
Let j = 2 and k = 1, motor 501 would spin once in the time motor 502 would spin twice.

This equation defines a relationship between the two motors, 501 and 502. The direction in which each of the two motors, 501 and 502, spin is unimportant. Position of a portable position sensor can be determined whether the motors counter-rotate or rotate together in the same direction.

In order to establish a fixed reference, it is necessary to cause the laser to pulse periodically. A shutter 520 covers the angular field of view defined by the difference in total angular rotation during one rotation of the slower motor. Turning the laser off and then on again while the fanned laser beams 510, 511 and 512 are within the field of the shutter removes any ambiguity in identification of the beams. If the two motors, 501 and 502, are spinning at an integer multiple of one another, the size of the shutter 520 required is minimal. The shutter 520 needs only to be large enough to cover any hysteresis in the power supply to the laser. By monitoring the missing pulses, the processor can identify the laser beams 510, 511, and 512.

If the signal to the receiver is never lost, or if the transmitter angle can be determined when signal is regained, then the laser never need be turned off. Software can track change in the angle to the receiver simply by monitoring the change of the strike pattern and the receiver.

The above is for illustrative purposes only. Modifications can be made within the scope of the invention as defined by the appended claims. For example, it is contemplated that each fixed station may produce a plurality of fan-shaped beams which oscillate back and forth instead of rotating. This oscillation may be achieved via any of a number of known mechanical, acousto-optical and other suitable mechanisms.

## Claims

1. A spatial positioning and measurement system for determining the instantaneous x-y-z position of an object (200, 300) in a three-dimensional coordinate system, said system comprising:

   (a) a plurality of fixed referent stations (101, 102, 103; 500) located at known locations within said coordinate system, each said referent station (101, 102, 103; 500) including emitter means for emitting at least two divergent sweeping radiation beams (130; 510, 511, 512);
   (b) a portable detector means (200, 300) located at said object for detecting said beams (130; 510, 511, 512) and emitting an energy beam on detection of a said beam (130; 510, 511, 512);
   (c) detecting means (110, 140, 155) for detecting said energy beams, said detecting means (110, 140, 155) generating a signal each time one of said energy beams is detected; and
   (d) determination means (150) for determining the position of said portable detector means (200, 300) within said coordinate system based upon said signals generated by said detecting means (110, 140, 155),

   characterized in that

   (i) said plurality of fixed referent stations (101, 102, 103; 500) together emit at least six sweeping radiation beams (130; 510, 511, 512), and

(ii) at least two of said plurality of said fixed referent stations (101,102,103;500) each emit at least two sweeping radiation beams (130; 511, 512) which are divergent in a plane perpendicular to the plane in which they are swept.

2. A system according to Claim 1, comprising a multiplicity of fixed referent stations (101, 102, 103; 500), at least two of which are located at known locations within said coordinate system, wherein said determination means (150) allows the position of each of said multiplicity of fixed referent stations (101, 102, 103; 500) other than said at least two to be determined in reference to each other.

3. A system according to claim 1 or claim 2, comprising three fixed referent stations (101, 102, 103; 500).

4. A system according to any preceding claim, wherein said beams (130; 510, 511, 512) rotate.

5. A system according to any preceding claim, wherein each fixed referent station (101, 102, 103; 500) emits two rotating laser beams (130; 511, 512).

6. A system according to any preceding claim, wherein each fixed referent station (101, 102, 103) emits a pair of counter-rotating laser beams (130).

7. A system according to claim 4 or claim 5, wherein each of said fixed referent stations (500) also emits a third rotating laser beam (510).

8. A system according to any preceding claim, wherein said beams (130; 510, 511, 512) oscillate.

9. A system according to any preceding claim, wherein said laser beams (130; 510, 511, 512) pulse periodically.

10. A system according to claim 9, wherein a shutter (520) is used to cause said laser beams (510, 511, 512) to pulse periodically.

11. A system according to any preceding claim, wherein said detector means (200) is a reflector (210).

12. A system according to any of claims 1 to 10, wherein said detector means (300) is a transponder (340), and said detecting means (140, 155) is a transponder receiver (140, 155).

13. A system according to claim 12, wherein said determination means (150) includes a processor which time-labels each of said signals generated by said detecting means (155) and a central processing system (150) which receives said time-labelled signals generated by said processor and calculates all angle and position information therefrom, and said transponder receiver (155) is disposed at said central processing system.

14. A system according to any of claims 1 to 12, wherein said determination means (150) includes a processor which time-labels each of said signals generated by said detecting means and a central processing system (150) which receives said time-labelled signals generated by said processor and calculates all angle and position information therefrom.

15. A system according to any preceding claim, wherein said detecting means (110, 140) are disposed at each of said fixed referent stations (101, 102, 103).

**Patentansprüche**

1. Räumliches Positionierungs- und Meßsystem zur Bestimmung der unmittelbaren x-y-z-Position eines Objekts (200, 300) in einem dreidimensionalen Koordinatensystem, umfassend:

(a) eine Vielzahl von festen Referenzstationen (101, 102, 103; 500), die sich an bekannten Stellen in dem Koordinatensystem befinden, wobei jede Referenzstation (101, 102, 103; 500) einen Sender zum Aussenden von zumindest zwei divergenten umherschweifenden Strahlen (130; 510, 511, 512) aufweist;
(b) einen tragbaren Detektor (200, 300), der sich bei diesem Objekt befindet, um diese Strahlen (130; 510, 511, 512) zu erfassen und um bei Erfassung dieses Strahls (130; 510, 511, 512) einen Energiestrahl auszu-

EP 0 659 265 B1

senden;

(c) Erfassungseinrichtungen (110, 140, 155) zur Erfassung dieser Energiestrahlen, wobei diese Erfassungseinrichtungen (110, 140, 155) jedesmal, wenn einer dieser Energiestrahlen erfaßt wird, ein Signal erzeugen; und

(d) eine Bestimmungseinrichtung (150) zur Bestimmung der Position des tragbaren Detektors (200, 300) in dem Koordinatensystem auf der Grundlage der von den Erfassungseinrichtungen (110, 140, 155) erzeugten Signale,

dadurch gekennzeichnet, daß

(i) die Vielzahl von festen Referenzstationen (101, 102, 103; 500) zusammen zumindest sechs umherschweifende Strahlen (130; 510, 511, 512) aussendet und

(ii) zumindest zwei der Vielzahl von festen Referenzstationen (101, 102, 103; 500) jeweils zumindest zwei umherschweifende Strahlen (130; 511, 512) aussenden, die in einer zur Ebene, in der sie schweifend bewegt werden, senkrechten Ebene divergent sind.

2. System nach Anspruch 1, umfassend eine Mehrzahl von festen Referenzstationen (101, 102, 103; 500), wovon zumindest zwei an bekannten Stellen in dem Koordinatensystem liegen, wobei es die Bestimmungseinrichtung (150) erlaubt, außer von den genannten wenigstens zwei Referenzstationen die Position der Mehrzahl von festen Referenzstationen (101, 102, 103; 500) in Bezug zueinander zu bestimmen.

3. System nach Anspruch 1 oder 2, umfassend drei feste Referenzstationen (101, 102, 103; 500).

4. System nach einem der vorhergehenden Ansprüche, in welchem die genannten Strahlen (130; 510, 511, 512) rotieren.

5. System nach einem der vorhergehenden Ansprüche, in welchem jede feste Referenzstation (101, 102, 103; 500) zwei rotierende Laserstrahlen (130; 511, 512) aussendet.

6. System nach einem der vorhergehenden Ansprüche, in welchem jede feste Referenzstation (101, 102, 103) ein Paar gegenläufig rotierender Laserstrahlen (130) aussendet.

7. System nach Anspruch 4 oder 5, in welchem jede der festen Referenzstationen (500) auch einen dritten rotierenden Laserstrahl (510) aussendet.

8. System nach einem der vorhergehenden Ansprüche, in welchem diese Strahlen (130; 510, 511, 512) oszillieren.

9. System nach einem der vorhergehenden Ansprüche, in welchem diese Laserstrahlen (130; 510, 511, 512) periodisch pulsieren.

10. System nach Anspruch 9, in welchem ein Verschluß (520) verwendet wird, um das periodische Pulsieren der Laserstrahlen (510, 511, 512) zu bewirken.

11. System nach einem der vorhergehenden Ansprüche, in welchem der Detektor (200) ein Reflektor (210) ist.

12. System nach einem der Ansprüche 1 bis 10, in welchem der Detektor (300) ein Transponder (340) und die Erfassungseinrichtung (140, 155) ein Transponderempfänger (140, 155) ist.

13. System nach Anspruch 12, in welchem die Bestimmungseinrichtung (150) einen Prozessor, der jedes der von der Erfassungseinrichtung (155) erzeugten Signale mit einer Zeitmarke versieht, und ein zentrales Verarbeitungssystem (150) enthält, welches die von dem Prozessor erzeugten, mit einer Zeitmarke versehenen Signale empfängt und daraus sämtliche Winkel- und Positionsinformationen berechnet, und in welchem der Transponderempfänger (155) an dem zentralen Verarbeitungssystem angeordnet ist.

14. System nach einem der Ansprüche 1 bis 12, in welchem die Bestimmungseinrichtung (150) einen Prozessor, der jedes der von der Erfassungseinrichtung erzeugten Signale mit einer Zeitmarke versieht, und ein zentrales Verarbeitungssystem (150) enthält, welches die von dem Prozessor erzeugten, mit einer Zeitmarke versehenen Signale empfängt und daraus sämtliche Winkel- und Positionsinformationen berechnet.

8

15. System nach einem der vorhergehenden Ansprüche, in welchem die Erfassungseinrichtungen (110, 140) an jeder der festen Referenzstationen (101, 102, 103) angeordnet sind.

## Revendications

1. Système de mesure et de positionnement spatial pour déterminer la position instantanée x-y-z d'un objet (200, 300) dans un système de coordonnées tridimensionnelles, ledit système comportant :

   (a) une pluralité de postes de référence fixés (101, 102, 103 ; 500) situés à des emplacements connus dans ledit système de coordonnées, chacun desdits postes de référence (101, 102, 103 ; 500) comportant des moyens d'émission pour émettre au moins deux faisceaux divergents de rayonnement de balayage (130 ; 510, 511, 512),
   (b) un moyen formant détecteur portable (200, 300) situé au niveau dudit objet pour détecter lesdits faisceaux (130 ; 510, 511, 512) et émettre un faisceau d'énergie lors de la détection d'un desdits faisceaux (130 ; 510, 511, 512),
   (c) un moyen de détection (110, 140, 155) pour détecter lesdits faisceaux d'énergie, ledit moyen de détection (110, 140, 155) produisant un signal à chaque fois qu'un desdits faisceaux d'énergie est détecté, et
   (d) un moyen de détermination (150) pour déterminer la position dudit moyen formant détecteur portable (200, 300) dans ledit système de coordonnées sur la base desdits signaux produits par ledit moyen de détection (110, 140, 155), caractérisé en ce que

   (i) les postes de ladite pluralité de postes de référence fixés (101, 102, 103 ; 500) émettent ensemble au moins six faisceaux de rayonnement de balayage (130 ; 510, 511, 512), et
   (ii) au moins deux postes de ladite pluralité de postes de référence fixés (101, 102, 103 ; 500) émettent chacun au moins deux faisceaux de rayonnement de balayage (130 ; 511, 512) qui sont divergents dans un plan perpendiculaire au plan dans lequel ils sont balayés.

2. Système selon la revendication 1, comportant une multiplicité de postes de référence fixés (101, 102, 103 ; 500), dont au moins deux sont situés à des emplacements connus dans ledit système de coordonnées, ledit moyen de détermination (150) permettant de déterminer en référence les unes aux autres les positions de chacun des postes de ladite multiplicité de postes de référence fixés (101, 102, 103 ; 500) autres que lesdits au moins deux postes.

3. Système selon la revendication 1 ou 2, comportant trois postes de référence fixés (101, 102, 103 ; 500).

4. Système selon l'une quelconque des revendications précédentes, dans lequel lesdits faisceaux (130 ; 510, 511, 512) tournent.

5. Système selon l'une quelconque des revendications précédentes, dans lequel chaque poste de référence fixé (101, 102, 103 ; 500) émet deux faisceaux laser rotatifs (130 ; 511, 512).

6. Système selon l'une quelconque des revendications précédentes, dans lequel chaque poste de référence fixé (101, 102, 103) émet une paire de faisceaux laser à rotation antagoniste (130).

7. Système selon la revendication 4 ou 5, dans lequel chacun desdits postes de référence fixés (500) émet également un troisième faisceau laser rotatif (510).

8. Système selon l'une quelconque des revendications précédentes, dans lequel lesdits faisceaux (130 ; 510, 511, 512) oscillent.

9. Système selon l'une quelconque des revendications précédentes, dans lequel lesdits faisceaux laser (130 ; 510, 511, 512) sont pulsés périodiquement.

10. Système selon la revendication 9, dans lequel un obturateur (520) est utilisé pour amener lesdits faisceaux laser (510, 511, 512) à pulser périodiquement.

11. Système selon l'une quelconque des revendications précédentes, dans lequel ledit moyen formant détecteur (200) est un réflecteur (210).

**12.** Système selon l'une quelconque des revendications 1 à 10, dans lequel ledit moyen formant détecteur (300) est un répéteur (340), et ledit moyen de détection (140, 155) est un récepteur de répéteur (140, 155).

**13.** Système selon la revendication 12, dans lequel ledit moyen de détermination (150) comporte un processeur qui marque en fonction du temps chacun desdits signaux produits par ledit moyen de détection (155) et un système central de traitement (150) qui reçoit lesdits signaux marqués en fonction du temps produits par ledit processeur et calcule toutes les informations d'angle et de position à partir de ceux-ci, et ledit récepteur de répéteur (155) est disposé au niveau dudit système central de traitement.

**14.** Système selon l'une quelconque des revendications 1 à 12, dans lequel ledit moyen de détermination (150) comporte un processeur qui marque en fonction du temps chacun desdits signaux produits par ledit moyen de détection et un système central de traitement (150) qui reçoit lesdits signaux marqués en fonction du temps produits par ledit processeur et calcule toutes les informations d'angle et de position à partir de ceux-ci.

**15.** Système selon l'une quelconque des revendications précédentes, dans lequel lesdits moyens de détection (110, 140) sont disposés au niveau de chacun desdits postes de référence fixés (101, 102, 103).

210

220

Fig. 2.

200

340

330

320

Fig. 3.

300

101

130

110

120

Fig. 1a

Fig. 1b

Fig. 1c

Fig. 4

EP 0 659 265 B1

Fig 5

Fig. 6

EP 0 659 265 B1

Fig. 7